# EUROPÄISCHE PATENTSCHRIFT

(11) **EP 0 788 730 B1**
(45) Veröffentlichungstag und Bekanntmachung des Hinweises auf die Patenterteilung: **11.12.2002**
(21) Anmeldenummer: 97100663.0
(22) Anmeldetag: 17.01.1997
(51) Int. Cl.: A01B 63/32, A01D 78/10, F15B 11/20

(54) **Landwirtschaftliche Maschine mit in Fahrtrichtung gestaffelt angeordneten Arbeitswerkzeugen**
Agricultural machine with implements arranged stepwise in the direction of operative travel
Machine agricole à outils échelonnés dans la direction de travail

(30) Priorität: 31.01.1996 DE 19603400
(43) Veröffentlichungstag der Anmeldung: 13.08.1997
(73) Patentinhaber: CLAAS Saulgau GmbH, 88340 Bad Saulgau (DE)
(72) Erfinder: Geng, Manfred, 88348 Saulgau-Bogenweiler (DE)

(56) Entgegenhaltungen:
- EP-A- 0 188 112
- WO-A-84/02250
- DE-A- 3 600 816
- DE-A- 3 900 724
- DE-A- 4 103 507
- GB-A- 2 057 580
- US-A- 1 498 258
- US-A- 3 918 240

## Beschreibung

Die Erfindung betrifft eine landwirtschaftliche Maschine mit in Fahrtrichtung gestaffelt angeordneten, mit Hilfe von Druckzylindern anhebbaren Arbeitswerkzeugen. Eine Maschine dieser Art ist zum Beispiel ein Kreiselschwader mit zwei oder mehr gestaffelt angeordneten Zinkenkreiseln, von denen einer dem anderen zuarbeitet. Die deutsche Patentanmeldung P 41 03 507.0 zeigt eine solche Maschine. Hierbei können zwar durch,zugeordnete Steuerventile einzelne Zinkenkreisel zum Hochschwenken ausgewählt werden. Sind aber zum Transport alle vorhandenen Zinkenkreisel in eine vertikale Stellung hochzuschwenken, so geht das nur zeitgleich in einem Vorgang.

Als weiteres Beispiel für eine gattungsgemäße Maschine (siehe DE-C-3 900 724) ist ein Pflug mit mehreren Pflugscharen zu nennen, die in einer schrägen Reihe stehen. Bekanntlich sind bei einem solchen Pflug nur alle Pflugscharen gemeinsam aushebbar.

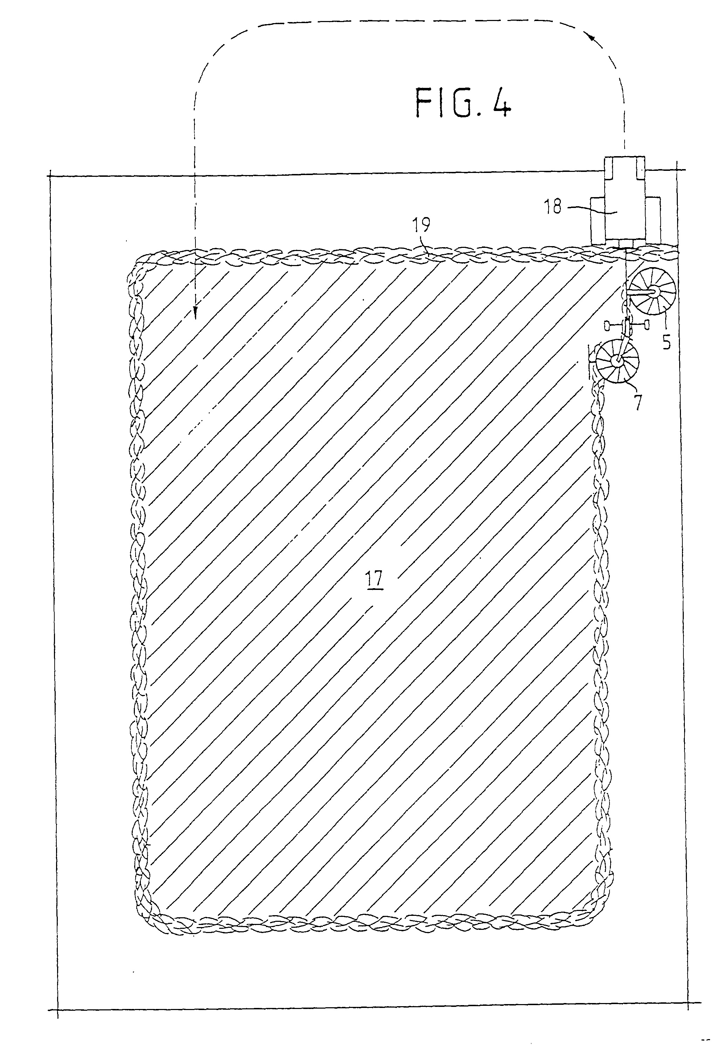

Beim Bearbeiten eines Feldes ergibt sich häufig die Situation, daß die Maschine auf eine vorher gelegte Arbeitsspur (Schwad, Furche) senkrecht auftrifft und diese Spur überqueren muß. Anhand der Figuren 4 bis 7 wird dies noch näher erläutert. Um die vorher gelegte Spur bei der Überquerung nicht zu beschädigen, werden die Arbeitswerkzeuge angehoben. Dabei bleiben jedoch Flächenteile unbearbeitet, die zwischen den nachlaufenden Werkzeugen und der zu überquerenden Spur liegen, weil diese Arbeitswerkzeuge zu früh angehoben werden unter der Voraussetzung, daß der Anhebevorgang beginnt, kurz bevor das vorauslaufende Arbeitswerkzeug die Spur erreicht.

Der Erfindung liegt die Aufgabe zugrunde, in der geschilderten Betriebssituation die zu überquerende Spur zu schonen und trotzdem die überfahrene Fläche restlos zu bearbeiten.

Diese Aufgabe wird erfindungsgemäß durch die kennzeichnenden Merkmale des Anspruchs 1 gelöst. Der Grundgedanke besteht darin, die Arbeitswerkzeuge nicht gleichzeitig, sondern nacheinander nach Maßgabe ihrer Annäherung an die zu schonende Spur anzuheben, und zwar durch eine selbsttätig arbeitende Steuervorrichtung, die vom Fahrer durch Betätigen eines Schaltorgans angesteuert bzw. ausgelöst wird. Das Anheben der einzelnen Arbeitswerkzeuge erfolgt dann in einer festliegenden zeitlichen Abfolge. Wird die Spur dann an anderer Stelle in entgegengesetzter Richtung überfahren und soll unmittelbar hinter der Spur die Flächenbearbeitung fortgesetzt werden, so betätigt der Fahrer das Schaltorgan erneut, was zur Folge hat, daß zuerst das vorauslaufende Arbeitswerkzeug abgesenkt wird und sodann die nachlaufenden Arbeitswerkzeuge in der gleichen Reihenfolge, und zwar ebenfalls in einer festliegenden zeitlichen Abfolge, die mit der zeitlichen Abfolge beim Anheben übereinstimmen kann; die Steueranordnung wird als Druckmittel-Schaltanordnung unter Verwendung verschiedener, an sich bekannter Ventile verwirklicht. Insbesondere eignen sich Elemente der hydraulischen Schalttechnik. Die Ventile sind auf bestimmte Schaltdrücke einstellbar und dadurch läßt sich die zeitliche Abfolge der Fortbewegungsgeschwindigkeit und dem gegenseitigen Abstand der Arbeitswerkzeuge anpassen.

Das vorgeschlagene Umsteuern der Ventile mit Hilfe bestimmter Schaltdrücke setzt voraus, daß der Systemdruck deutlich ansteigt, sobald das vorauslaufende Arbeitswerkzeug einen zur Schonung einer zu überfahrenden Arbeitsspur ausreichenden Schwenkwinkel erreicht hat. Dazu wird vorgeschlagen, daß ein zum Betrieb auf dem Feld einlegbarer, mit dem vorauslaufenden Arbeitswerkzeug zusammenwirkender Anschlag vorgesehen ist, der den Schwenkwinkel entsprechend begrenzt. Zweckmäßigerweise ist der Anschlag gefedert.

Die vorgeschlagene Schaltanordnung läßt sich für drei oder mehr gestaffelte Arbeitswerkzeuge erweitern. Dazu werden auch für die zusätzlichen Arbeitswerkzeuge Anschläge vorgesehen und jeweils ein weiteres, beim Schaltdruck öffnendes Sperrventil.

Die Betätigung der Steuervorrichtung erfolgt zweckmäßigerweise mit Hilfe eines Umschaltventils, das wahlweise eine Druckquelle oder eine drucklose Rücklaufleitung mit dem Eingang der Schaltanordnung verbindet.

Ein Ausführungsbeispiel wird nachfolgend anhang der Zeichnung erläutert, welche die Verwendung einer erfindungsgemäßen teilselbsttätigenden Anordnung zum Anheben der zwei Zinkenkreisel eines Kreiselschwaders wiedergibt.

Im einzelnen zeigt
- Fig. 1: die schematische Draufsicht eines Schwaders mit zwei gestaffelt angeordneten Zinkenkreiseln,
- Fig. 2: das Schaltbild der hydraulischen Steueranordnung für die Druckzylinder zum Anheben der Zinkenkreisel,
- Fig. 3: eine seitliche Teilansicht des Schwenkmechanismus eines Zinkenkreisels der in Fig. 1 dargestellten Maschine,
- Fig. 4: im größeren Maßstab die Skizze eines rechteckigen Feldes, auf dem das Mähgut mit Hilfe eines Schwaders nach Fig. 1 schon teilweise zu einem Schwad zusammengerecht ist,
- Fig. 5-7: weitere Skizzen dieses Feldes mit Darstellung des Schwaders in nachfolgenden Stadien des Arbeitsvorgangs.

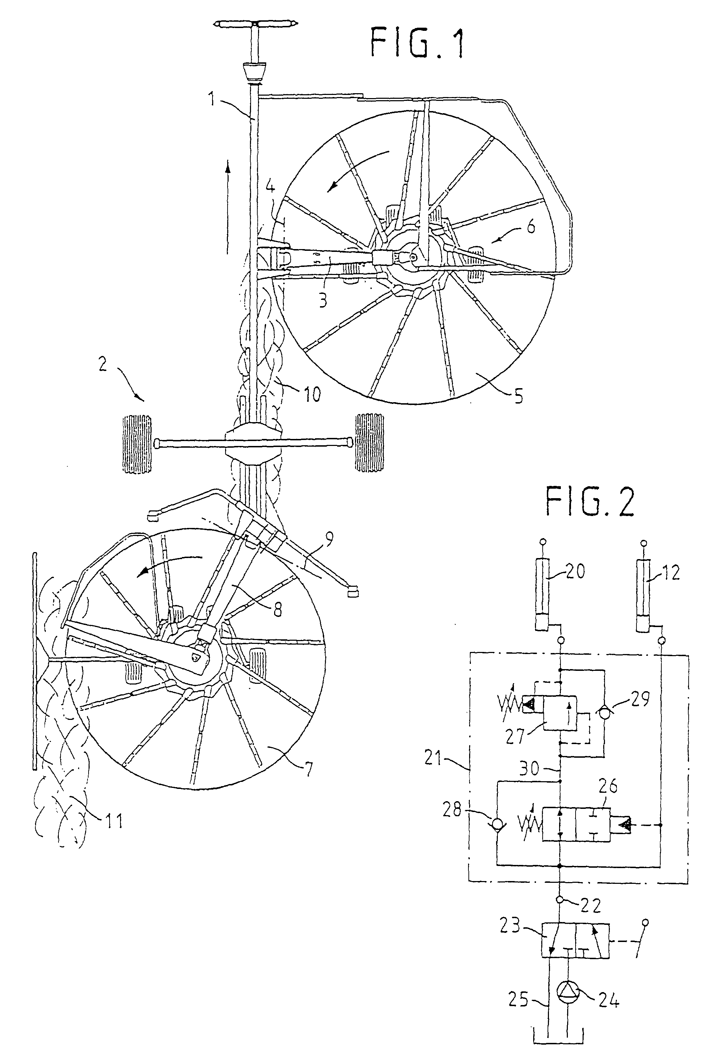

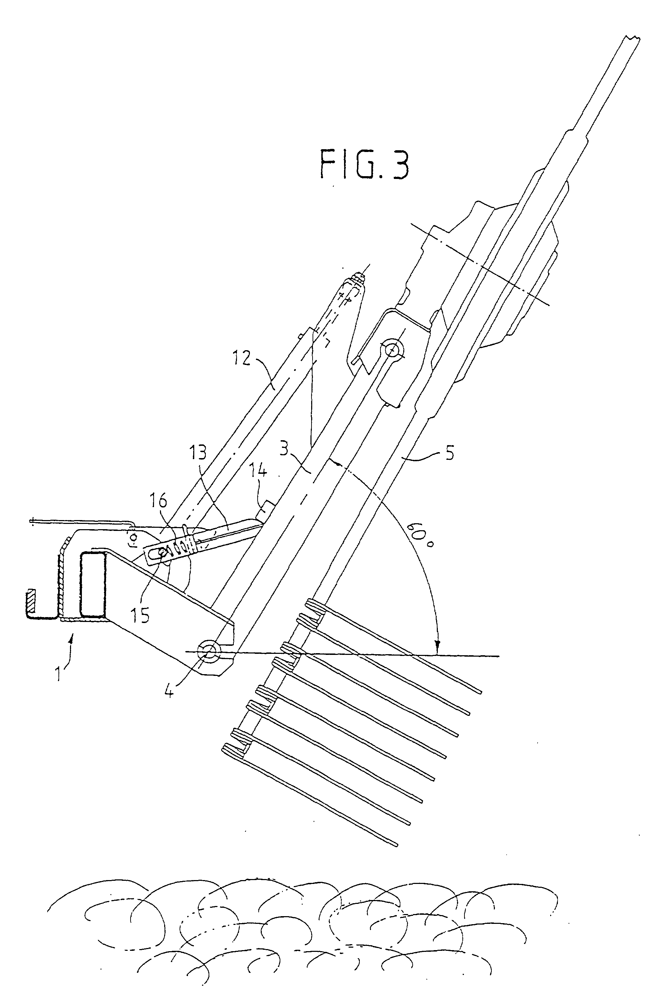

Der Zweitkreisel-Schwader nach Fig. 1 hat einen Längsholm 1, der auch die Deichsel bildet und auf einem zweirädrigen Fahrgestell 2 ruht. Am vorderen Abschnitt des Längsholms 1 ist ein Arm 3 um eine parallel zum Längsholm verlaufende Schwenkachse 4 schwenkbar gelagert (s. auch Fig. 3). An dem Arm 3 ist ein Zinkenkreisel 5 mit gesteuerten Schwadrechen gelagert, dessen Achse senkrecht zum Arm 3 und in der hier gezeigten Arbeitsstellung vertikal steht. Der Zinkenkreisel 5 stützt sich auf ein Vierrad-Fahrgestell 6. Ein weiterer Zinkenkreisel 7 ähnlicher Größe und Ausbildung ist am rückwärtigen Teil des Längsholms 1 bzw. des Fahrgestells 2 mittels eines Armes 8 hochschenkbar gelagert. Die Schwenkachse 9 dieses Armes verläuft horizontal und schräg zur Fahrtrichtung, so daß der Kreisel zum Transport in die Spur des Fahrgestells 2 einschwenken kann.

Beide Zinkenkreisel drehen sich im Gegenuhrzeigersinn. Der vorauslaufende Zinkenkreisel 5 legt einen Kleinschwad 10 in der Mitte ab. Der nachlaufende Zinkenkreisel 7 nimmt diesen auf und bildet links außen einen Doppelschwad 11.

In der Fig. 3 ist der Längsholm 1 im Querschnitt dargestellt sowie die Lagergabel des Armes 3, der den Zinkenkreisel 5 trägt und dessen Schwenkachse mit 4 bezeichnet ist. Außerdem ist ein hydraulischer Druckzylinder 12 angedeutet, der den Arm 3 mit dem Zinkenkreisel 5 hochschwenkt bzw. absenkt. Eine Stütze 13 wirkt mit einem Anschlag 14 des Armes 3 zusammen. Ein am Längsholm befestigter Querzapfen 15 durchsetzt ein Langloch der Stütze 13, die eine Feder 16 enthält und somit elastisch nachgeben kann. Außerdem läßt sich die Stütze 13 wegschwenken, so daß der Arm mit dem Zinkenkreisel zum Transport in die Vertikalstellung geschwenkt werden kann. In der gezeigten Anschlagstellung hingegen ist der Schwenkwinkel auf 60° begrenzt, was jedoch genügt, um den Kreisel im wesentlichen über einen zu querenden Schwad hinwegzuheben.

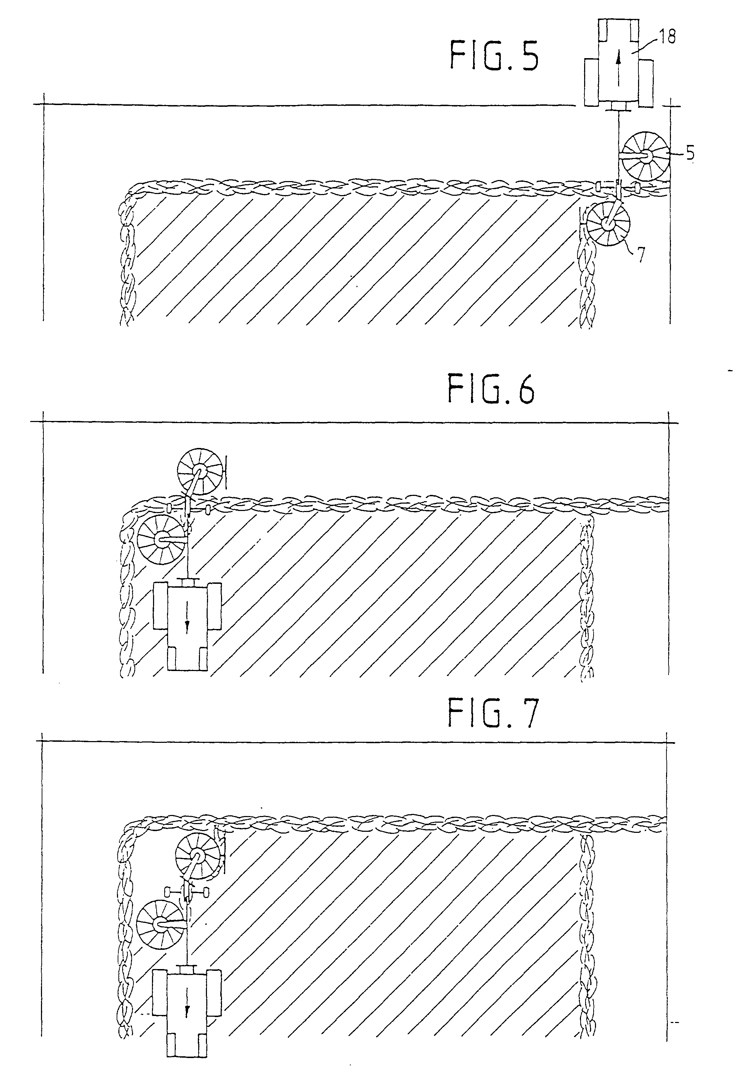

Anhand der Figuren 4 bis 7 wird zunächst das Arbeiten mit dem beschriebenen Kreiselschwader beschrieben. Auf dem rechteckigen Feld stellt die schraffierte Fläche 17 das ungerechte gemähte Halmgut dar. Der von einem Schlepper 18 gezogene Schwader ist gemäß Fig. 4 oben von rechts nach links in das Feld eingefahren und hat in der ersten Runde einen Schwad 19 gelegt. Der Schwader nähert sich nun von unten (bezogen auf Fig. 4) dem querverlaufenden Anfangsschwad, den der Schlepper bereits überfahren hat. In diesem Moment betätigt der Fahrer das Schaltorgan und bewirkt damit, daß der vorauslaufende Kreisel 5 angehoben wird, während der nachlaufende Kreisel 7 noch in Arbeitsstellung verbleibt und somit bis dicht an den Querschwad heran weiter recht. Dies ist die Situation nach Fig. 5. Die Steueranordnung ist so eingestellt, daß in diesem Moment auch der nachlaufende Kreisel 7 anhebt und somit der Querschwad beim Überfahren unbeschädigt bleibt.

Beide Kreisel behalten zunächst ihre 60°-Stellung bei, während der Fahrer wendet und schließlich gemäß Fig. 6 den Anfangsschwad 19 von oben kommend wiederum kreuzt. Hier kommt es darauf an, daß der vorauslaufende Kreisel 5 sofort hinter dem Querschwad wieder in die Arbeitsstellung abgesenkt wird. Der Fahrer betätigt dementsprechend bei Erreichen der Stellung nach Fig. 6 seine Steuertaste erneut (oder legt im Falle eines Steuerhebels diesen wieder zurück). Während so der vorauslaufende Kreisel seine Arbeit wieder aufnimmt, bleibt der nachlaufende Kreisel in der angehobenen Stellung, bis er über den Querschwad hinweggeführt ist und wird dann selbsttätig wieder in die Arbeitsstellung abgesenkt (Fig. 7).

Die Steuervorrichtung mit der beschriebenen Wirkung erlaubt es dem Fahrer, die Fahrgeschwindigkeit durchweg beizubehalten und dadurch eine höhere Flächenleistung und zugleich ein fehlerloses Rechbild zu erzielen. Somit ist gewährleistet, daß in dem nachfolgenden Arbeitsgang das geschwadete Erntegut restlos aufgenommen werden kann. Dabei ist die Bedienung denkbar einfach, denn sie beschränkt sich auf die Betätigung eines einzigen Schaltorgans.

Eine hydraulische Steueranordnung, die in der beschriebenen Weise wirkt, ist in Fig. 2 dargestellt. Zum Anheben des vorauslaufenden Zinkenkreisels 5 dient, wie erwähnt, ein einfach wirkender hydraulischer Druckzylinder 12 und zum Anheben des nachlaufenden Zinkenkreisels 7 ein entsprechender Druckzylinder 20. Sie sind beide an den Ausgang einer Druckmittel-Schaltanordnung 21 angeschlossen. Deren Eingang 22 ist über ein im Beispiel von Hand zu betätigendes Umschaltventil 23 wahlweise mit einer Hydraulikpumpe 24 oder einer drucklosen Rückleitung 25 verbunden. Die Schaltanordnung 21 enthält ein normal geöffnetes Sperrventil 26, das bei einem Schaltdruck von etwa 3 Bar an seinem Eingang schließt und ein normal geschlossenes Sperrventil 27, das bei einem höheren Eingangsdruck von etwa 100 Bar öffnet. Diese beiden Ventile liegen zwischen dem Eingang 22 und dem Druckzylinder 20 in Reihe. Beide Sperrventile 26 und 27 sind durch Rückschlagventile 28 und 29 überbrückt, die zu der Verbindungsleitung 30 der beiden Sperrventile hin öffnen. Der Druckzylinder 12 ist unmittelbar an den Eingang 22 angeschlossen.

Steht das Umschaltventil 23 wie gezeichnet, so ist die Rückleitung 25 mit der Schaltanordnung 21 verbunden. Die Zylinder sind drucklos. Die beiden Zinkenkreisel 5 und 7 befinden sich in ihrer Arbeitsstellung.

Wird kurz vor Erreichen eines vorher abgelegten Querschwads das Umschaltventil 23 in die andere Stellung gebracht, so wird der vorauslaufende Zinkenkreisel 5 sofort angehoben, da sein Druckzylinder 12 unmittelbar angeschlossen ist. Der Druck steigt schnell und demzufolge schließt das Sperrventil 26. Der Druck wirkt sich aber über das Rückschlagventil 28 weiter auf das Sperrventil 27 aus. Wenn schließlich der vorauslaufende Zinkenkreisel 5 seine Anschlagstellung gemäß Fig. 3 erreicht hat, steigt der Druck erst recht. Dann öffnet das Sperrventil 27 und führt zum Anheben auch des nachlaufenden Zinkenkreisels 7. Zuvor ist, für die Arbeit auf dem Feld, die Stütze 13 in die gezeigte Stellung geschwenkt worden. Der Zeitverzug zwischen den beiden Anhebevorgängen kann, wie erwähnt, an den Sperrventilen oder mit Hilfe von Drosseln oder dergleichen nach den betrieblichen Gegebenheiten, insbesondere der Fahrgeschwindigkeit des Schwaders, eingestellt werden.

Der umgekehrte Vorgang, nämlich die Wiederaufnahme des Schwaderbetriebs nach dem Überfahren eines vorher abgelegten Querschwads wird durch das Zurückstellen des Umschaltventils 23 in die gezeichnete Stellung eingeleitet. Der Druckzylinder 12 des vorauslaufenden Schwaders 5 wird sofort drucklos. Durch das Sperrventil 26 und das Rückschlagventil 28 ist hingegen das Druckmedium des anderen Zylinders zunächst noch eingeschlossen. Das ändert sich erst, wenn der Druck unter 3 bar abgesunken ist und das Sperrventil 26 deshalb öffnet. Jetzt schließt zwar das Sperrventil 27, jedoch kann das Druckmedium des Zylinders 20 über das Rückschlagventil 29 zurückströmen, so daß mit entsprechendem zeitlichem Verzug auch der nachlaufende Zinkenkreisel 7 in seine Arbeitsstellung zurückkehrt. Auch hierbei ist die zeitliche Abfolge nach Bedarf einstellbar.
- 1: Längsholm
- 2: Fahrgestell
- 3: Arm
- 4: Schwenkachse
- 5: Zinkenkreisel
- 6: Vierrad-Fahrgestell
- 7: Zinkenkreisel
- 8: Arm
- 9: Schwenkachse
- 10: Kleinschwad
- 11: Doppelschwad
- 12: Druckzylinder
- 13: Stütze
- 14: Anschlag
- 15: Querzapfen
- 16: Feder
- 17: Ungerechtes
- 18: Schlepper
- 19: Schwad
- 20: Druckzylinder
- 21: Schaltanordnung
- 22: Eingang
- 23: Umschaltventil
- 24: Hydraulikpumpe
- 25: Rückleitung
- 26: Sperrventil
- 27: Sperrventil
- 28: Rückschlagventil
- 29: Rückschlagventil
- 30: Verbindungsleitung

## Patentansprüche

1. Landwirtschaftliche Maschine mit in Fahrtrichtung gestaffelt angeordneten, mit Hilfe von Druckzylindern einzeln anhebbaren Arbeitswerkzeugen, wobei die Druckzylinder (12, 20) der Arbeitswerkzeuge (5, 7) mit einer Druckmittel-Schaltanordnung (21) verbunden sind, die mittels eines zwei Stellungen aufweisenden Umschaltventils (23) ansteuerbar ist, und wobei in der einen Stellung des Umschaltventils (23) die Arbeitswerkzeuge (5, 7) in einer bestimmten Reihenfolge und zeitlichen Abfolge angehoben werden und in der anderen Stellung des Umschaltventils in der gleichen Reihenfolge und einer bestimmten zeitlichen Abfolge abgesenkt werden, **dadurch gekennzeichnet, daß** die Schaltanordnung (21) umfaßt:
- ein erstes normal geöffnetes Sperrventil (26), das bei einem ersten niedrigen Schaltdruck an seiner Eingangsseite sperrt,
- sowie ein zweites normal geschlossenes Sperrventil (27), das bei einem zweiten hohen Schaltdruck an seiner Eingangsseite öffnet,
**daß** am Eingang (22) der Schaltanordnung der Druckzylinder (12) eines ersten Arbeitswerkzeugs (5) angeschlossen ist,
**daß** am Eingang (22) der Schaltanordnung das erste Sperrventil (26), das zweite Sperrventil (27) und der Druckzylinder (20) eines zweiten Arbeitswerkzeugs (7) in Reihenschaltung angeschlossen sind,
und **daß** das erste Sperrventil (26) durch ein zum zweiten Sperrventil (27) hin öffnendes Rückschlagventil (28) und das zweite Sperrventil (27) durch ein zum ersten Sperrventil hin öffnendes Rückschlagventil (29) überbrückt ist.

2. Maschine nach Anspruch 1, **dadurch gekennzeichnet, daß** ein zum Betrieb auf dem Feld einlegbarer, mit dem vorauslaufenden Arbeitswerkzeug (5) zusammenwirkender Anschlag (13, 14) vorgesehen ist, der den Ausschwenkwinkel dieses Arbeitswerkzeugs (5) auf einen zur Schonung einer zu überfahrenden Arbeitsspur ausreichenden Wert begrenzt.

3. Maschine nach Anspruch 1, **dadurch gekennzeichnet, daß** an der Anschlußleitung des Druckzylinders (20) für das zweite Arbeitswerkzeug ein weiterer Druckzylinder über ein weiteres, normal geschlossenes und durch ein Rückschlagventil überbrücktes Sperrventil angeschlossen ist und die Schaltdrücke aller drei Sperrventile aufsteigend gestuft sind.

4. Maschine nach Anspruch 1, **dadurch gekennzeichnet, daß** das Umschaltventil (23) eine Druckquelle (24) und eine drucklose Rücklaufleitung (25) abwechselnd mit dem Eingang (22) der Schaltanordnung verbindet.

5. Verwendung der teilselbsttätigenden Anordnung nach einem der vorhergehenden Ansprüche beim Anheben der Arbeitswerkzeuge bei einem Kreiselschwader mit wenigstens zwei in Fahrtrichtung gestaffelt angeordneten Zinkenkreiseln.

## Claims

1. An agricultural machine comprising working implements which are arranged staggered in the direction of travel and which can be individually lifted by means of pressure cylinders, wherein the pressure cylinders (12, 20) of the working implements (5, 7) are connected to a pressure fluid switching arrangement (21) which is actable by means of a change-over switching valve (23) having two positions, and wherein in the one position of the change-over switching valve (23) the working implements (5, 7) are lifted in a given sequence and time succession and in the other position of the change-over switching valve they are lowered in the same sequence and a given time succession, **characterised in that** the switching arrangement (21) includes:
- a first normally opened shut-off valve (26) which shuts off at a first low switching pressure at its input side,
- and a second normally closed shut-off valve (27) which opens at a second high switching pressure at its input side,
**that** the pressure cylinder (12) of a first working implement (5) is connected to the input (22) of the switching arrangement,
**that** the first shut-off valve (26), the second shut-off valve (27)and the pressure cylinder (20) of a second working implement (7) are connected in series to the input (22) of the switching arrangement,
and **that** the first shut-off valve (26) is bridged by a check valve (28) which opens towards the second shut-off valve (27) and the second shut-off valve (27) is bridged by a check valve (29) which opens towards the first shut-off valve.

2. A machine according to claim 1 **characterised in that** there is provided an abutment (13, 14) which can be inserted for operation on the field and which cooperates with the leading working implement (5) and which limits the angle of outward deflection movement of that working implement (5) to a value which is sufficient to protect a working track to be travelled over.

3. A machine according to claim 1 **characterised in that** a further pressure cylinder is connected to the connecting line of the pressure cylinder (20) for the second working implement by way of a further normally closed shut-off valve bridged by a check valve and the switching pressures of all three shut-off valves are stepped in a rising relationship.

4. A machine according to claim 1 **characterised in that** the change-over switching valve (23) connects a pressure source (24) and a pressure-less return line (25) alternately to the input (22) of the switching arrangement.

5. Use of the partially self-actuating arrangement according to one of the preceding claims when lifting the working implements in a rotary windrower with at least two tine rotors which are arranged staggered in the direction of travel.

## Revendications

1. Machine agricole équipée d'outils échelonnés dans la direction de travail qui peuvent être relevés individuellement à l'aide de vérins à pression de fluide, les vérins (12, 20) à pression de fluide des outils (5, 7) étant reliés à un dispositif de contrôle (21) de fluide sous pression commandé par une soupape de commutation (23) à deux positions, les outils (5, 7), dans l'une des positions de la soupape de commutation (23), étant relevés selon une séquence et une succession dans le temps déterminées et, dans l'autre position de la soupape de commutation, étant abaissés selon la même séquence et selon une succession dans le temps déterminée, **caractérisée**
**en ce que** le dispositif de contrôle (21) comprend
• une première soupape d'arrêt (26) ouverte dans la position normale, qui se ferme lorsqu'une première pression de commande faible est appliquée à son entrée,
• ainsi qu'une seconde soupape d'arrêt (27) fermée dans la position normale, qui s'ouvre lorsqu'une deuxième pression de commande élevée est appliquée à son entrée,
**en ce que** le vérin (12) à pression de fluide d'un premier outil (5) est connecté à l'entrée (22) du dispositif de contrôle,
**en ce que** la première soupape d'arrêt (26), la seconde soupape d'arrêt (27) et le vérin (20) à pression de fluide d'un deuxième outil (7) sont connectés en série à l'entrée (22) du dispositif de contrôle,
et **en ce que** la première soupape d'arrêt (26) est pontée par une soupape anti-retour (28) passante en direction de la seconde soupape d'arrêt (27) et la seconde soupape d'arrêt (27) est pontée par une soupape anti-retour (29) passante en direction de la première soupape d'arrêt (26).

2. Machine selon le revendication 1, **caractérisée en ce qu'**il est prévu une butée (13, 14) qui peut être activée lors du travail dans le champ, coopère avec l'outil (5) de tête et limite l'angle de pivotement dudit outil (5) à une valeur permettant d'éviter une bande de travail devant être franchie.

3. Machine selon le revendication 1, **caractérisée en ce qu'**un vérin à pression de fluide supplémentaire est connecté à la conduite de liaison du vérin à pressian de fluide (20) pour le deuxième outil par une soupape d'arrêt supplémentaire qui est fermée dans la position normale et est pontée par une soupape anti-retour et **en ce que** les pressions de commande des trois soupapes d'arrêt sont échelonnées.

4. Machine selon le revendication 1, **caractérisée en ce que** la soupape de commutation (23) connecte alternativement une source de pression (24) et une conduite de retour (25) sans pression à l'entrée (22) du dispositif de contrôle.

5. Utilisation du dispositif partiellement automatique selon une des revendications précédentes pour le relevage des outils sur une andaineuse rotative comportant au moins deux toupies décalées dans la direction de déplacement.
